# EUROPÄISCHE PATENTSCHRIFT

(11) **EP 2 975 367 B1**
(45) Veröffentlichungstag und Bekanntmachung des Hinweises auf die Patenterteilung: **04.04.2018**
(21) Anmeldenummer: 14177543.7
(22) Anmeldetag: 17.07.2014
(51) Int. Cl.: G01F 23/284, G01F 23/296

(54) **Belüftungs- und Füllstandsmessvorrichtung**
Ventilation and fill level measurement device
Dispositif d'aération et de mesure du niveau de remplissage

(43) Veröffentlichungstag der Anmeldung: 20.01.2016
(73) Patentinhaber: WALTER STAUFFENBERG GMBH & CO. KG, 58791 Werdohl (DE)
(72) Erfinder: König, Ulrich Stefan, 58849 Herscheid (DE); Hartmann, Ralf, 58675 Hemer (DE)
(74) Vertreter: Patentanwälte Dörner & Kötter PartG mbB

(56) Entgegenhaltungen:
- WO-A1-2008/037302
- DE-A1- 3 117 477
- DE-A1- 4 317 629
- DE-B- 1 185 414
- DE-U1- 8 907 726
- DE-U1- 9 016 848
- US-A- 5 762 671

## Beschreibung

Die Erfindung betrifft eine Vorrichtung zur Belüftung und Füllstandsmessung eines eine Öffnung mit einem Lochbild zur Aufnahme eines Belüftungsfilters aufweisenden Hydraulikbehälters nach dem Patentanspruch 1.

Geschlossene Hydrauliktanks werden typischerweise mit einem Belüftungsfilter ausgerüstet, um den notwendigen Luftmassenaustausch bei steigendem beziehungsweise sinkendem Ölspiegel zu gewährleisten. Zur Kontrolle des Füllgrades des Tanks ist es weiterhin bekannt, diesen mit einer Füllstandsmesseinrichtung zu versehen, welche regelmäßig ein Tauchrohr umfasst, in welchem ein Reedschalter platziert ist. Hierbei ist ein Schwimmer angeordnet, der dem Ölfüllstand im Tank folgt und dabei den Reedschalter betätigt. Hierfür ist eine weitere Öffnung im Behälter erforderlich, durch die das Tauchrohr in den Behälter eingeführt wird.

Zur Reduzierung der in dem Tank erforderlichen Öffnungen und Lochbilder ist es aus der DE 90 16 848 U1 bekannt, die für die Niveaumessvorrichtung erforderliche Behälteröffnung gleichzeitig als filterausgerüstete Be- und Entlüftungsöffnung zu nutzen. Hierzu wird eine Vorrichtung zur Niveaumessung von Flüssigkeitsständen mit einer durch eine Behälteröffnung in den Behälter eingeführten Messlanze vorgeschlagen, über welche ein mittels einer im Tank vorgesehenen Schwimmeranordnung erzeugtes elektrisches Messsignal aus dem Tank geleitet ist, wobei die Lanze einen die Behälteröffnung vollständig verschließbaren Kragen aufweist, auf dem ein geschlossener Topf mit Luftdurchtrittsöffnungen und mit einem Filtereinsatz aufsitzt und wobei der Kragen über den Umfang des Durchtritts der Lanze durch den Kragen verteilte Luftschlitze aufweist. Nachteilig bei dieser vorgeschlagenen Vorrichtung ist, dass diese einen erheblichen Bauraum beansprucht. Zudem kann es zu Verschmutzungen der Luftschlitze kommen. Nicht zuletzt unterliegen die im Stand der Technik eingesetzten Lanzen einem signifikanten Verschleiß durch den dauerhaften Kontakt mit Hydrauliköl.

Hier will die Erfindung Abhilfe schaffen. Der Erfindung liegt die Aufgabe zu Grunde, eine Vorrichtung zur Belüftung und Füllstandsmessung eines Hydraulikbehälters bereitzustellen, die kompakt aufgebaut ist und eine lange Standzeit ermöglicht. Gemäß der Erfindung wird diese Aufgabe durch eine Vorrichtung mit den Merkmalen des Patentanspruchs 1 gelöst.
Mit der Erfindung ist eine Vorrichtung zur Belüftung und Füllstandsmessung eines Hydraulikbehälters bereitgestellt, die kompakt aufgebaut ist und die eine lange Standzeit ermöglicht. Durch den angeordneten Sensor zur berührungslosen Füllstandsmessung ist die im Stand der Technik zum Einsatz kommende Lanze nicht mehr erforderlich. Zudem ermöglicht die an dem ringförmigen Basiskörper angeordnete Aufnahme für einen Belüftungsfilter eine gute Zugänglichkeit des Filters. Vorteilhaft sind die Mittel zur Befestigung an dem Lochbild des Hydraulikölbehälters durch einen mit diesem Lochbild zumindest bereichsweise korrespondierenden, in dem Basiskörper angeordneten Lochbild gebildet. In Weiterbildung der Erfindung ist der Sensor ein Ultraschallsensor. Hierbei handelt es sich um ein kompaktes standardisiertes Bauteil, welches eine kompakte Bauweise ermöglicht. Alternativ können auch weitere berührungslose Sensoren, wie beispielsweise Radarsensoren zum Einsatz kommen.
In Ausgestaltung der Erfindung ist an dem Basiskörper eine elektrische Anschlussbuchse angeordnet, die mit dem Sensor verbunden ist. Hierdurch ist eine einfache Ankopplung eines Anschlusskabels ermöglicht.
In vorteilhafter Ausgestaltung der Erfindung ist an dem Basiskörper eine Schutzkappe zur Abdeckung des Sensors angeordnet. Hierdurch ist ein direkter Kontakt des Sensors mit Hydrauliköl vermieden, wodurch dessen Standzeit erhöht ist. Gemäß der Erfindung umfasst die Aufnahme für den Belüftungsfilter ein genormtes Lochbild, insbesondere nach DIN 24557. Hierdurch ist eine einfache Nachrüstung eines Hydraulikbehälters unter Weiterverwendung eines vorhandenen Belüftungsfilters ermöglicht. Alternativ oder zusätzlich kann die Aufnahme auch einen Bajonettanschluss umfassen.

In Ausgestaltung der Erfindung ist der Siebkörper rohrförmig ausgebildet. Hierdurch ist eine gute Entlüftung sowie auch ein gleichmäßiger Eintrag von Hydrauliköl in den Hydrauliktank ermöglicht. Der Siebkörper dient hier insbesondere der Filterung von zugeführtem Hydrauliköl.

In weiterer Ausgestaltung der Erfindung ist an dem Basiskörper ein Sensor zur berührungslosen Temperaturerfassung angeordnet, der insbesondere durch ein Pyrometer gebildet ist. Hierdurch ist eine zusätzliche Temperaturerfassung bei gleichzeitiger Beibehaltung der kompakten Bauweise der Vorrichtung erzielt.

In weiterer Ausgestaltung der Erfindung ist der Sensor zur berührungslosen Füllstandsmessung und / oder der Sensor zur berührungslosen Temperaturerfassung lösbar in dem Basiskörper angeordnet. Hierdurch ist ein einfacher Austausch von defekten Sensorkomponenten ermöglicht.

Andere Weiterbildungen und Ausgestaltungen der Erfindung sind in den übrigen Unteransprüchen angegeben. Ein Ausführungsbeispiel der Erfindung ist den Zeichnungen dargestellt und wird nachfolgend im Einzelnen beschrieben. Es zeigen:
- Figur 1: die schematische Darstellung einer Vorrichtung zur Belüftung und Füllstandsmessung eines Hydraulikbehälters
a) in räumlicher Darstellung;
b) in räumlicher Darstellung mit angeordnetem Belüftungsfilter;
- Figur 2: die Darstellung der Vorrichtung aus Figur 1
a) in der Seitenansicht;
b) in der Seitenansicht mit aufgesetztem Belüftungsfilter;

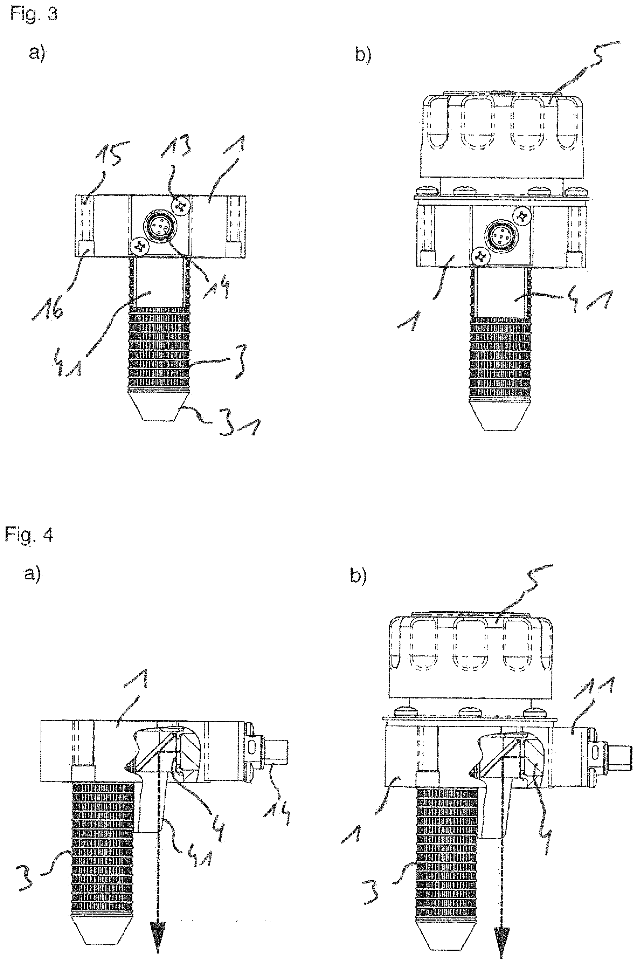

- Figur 3: die Darstellung der Vorrichtung gemäß Figur 1
a) in der Vorderansicht;
b) in der Vorderansicht mit aufgesetztem Belüftungsfilter;
- Figur 4: die Seitenansicht der Vorrichtung gemäß Figur 2
a) in Teilschnittdarstellung;
b) in Teilschnittdarstellung mit aufgesetztem Belüftungsfilter und

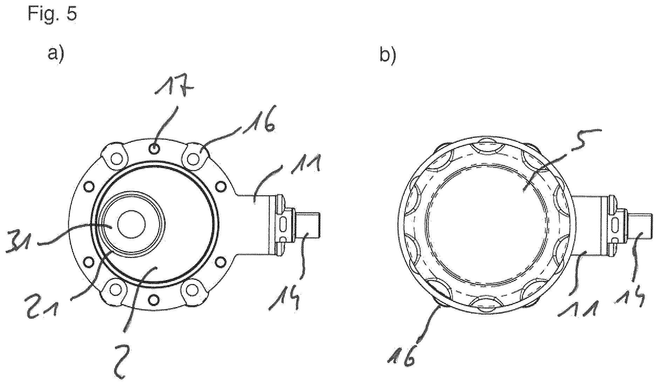

- Figur 5: die Darstellung der Vorrichtung aus Figur 1
a) in der Draufsicht;
b) in der Draufsicht mit aufgesetztem Belüftungsfilter.

Die als Ausführungsbeispiel gewählte Vorrichtung zur Belüftung und Füllstandsmessung eines eine Öffnung mit einem Lochbild zur Aufnahme eines Belüftungsfilters aufweisenden Hydraulikölbehälters besteht im Wesentlichen aus einem ringförmigen Basiskörper 1, der eine Halteplatte 2 aufnimmt, in dem ein Siebkörper 3 gehalten ist, wobei in dem Basiskörper 1 ein Ultraschallsensor 4 zur berührungslosen Füllstandsmessung angeordnet ist.

Der Basiskörper 1 ist im Ausführungsbeispiel als Kunststoffspritzgießteil ausgeführt. Seitlich ist an dem ringförmigen Basiskörper 1 eine im Wesentlichen hohlquaderförmige Anformung 11 angeordnet, die über eine Verschlussplatte 12 mittels Schrauben 13 verschlossen ist und in der eine Anschlussbuchse 14 angeordnet ist, welche die Verschlussplatte 12 durchdringt. Die Anschlussbuchse 14 ist elektrisch mit dem in dem Basiskörper 1 angeordneten Ultraschallsensor 4 verbunden, der aus dem Basiskörper 1 herausragt und von einer Schutzkappe 41 umgeben ist, die an dem Basiskörper 1 befestigt ist. In die Mantelfläche des Basiskörpers 1 sind umlaufend vier Einsenkungen 15 eingebracht, welche jeweils in eine Öse 16 münden. Die Ösen 16 sind derart angeordnet, dass sie mit Befestigungslöchern eines nach DIN 24557 genormten Lochbildes eines Hydraulikbehälters fluchten. Der Basiskörper 1 ist so über die Ösen16 mittels Schrauben an dem - nicht dargestellten - Hydraulikbehälter befestigbar. Versetzt zu den Einkerbungen 15 sind in den Basiskörper 1 sechs Gewindebohrungen 17 eingebracht, welche ebenfalls ein entsprechendes nach DIN 24557 ausgebildetes Lochbild ausbilden.

In den ringförmigen Basiskörper 1 ist eine kreisrunde Halteplatte 2 eingesetzt, welche mit einer kreisrunden Durchführung 21 versehen ist, in die ein Siebkörper 3 eingesetzt ist. Der Siebkörper 3 ist im Wesentlichen hohlzylindrisch ausgebildet und mündet in einen konisch zulaufenden Einfülltrichter 31.

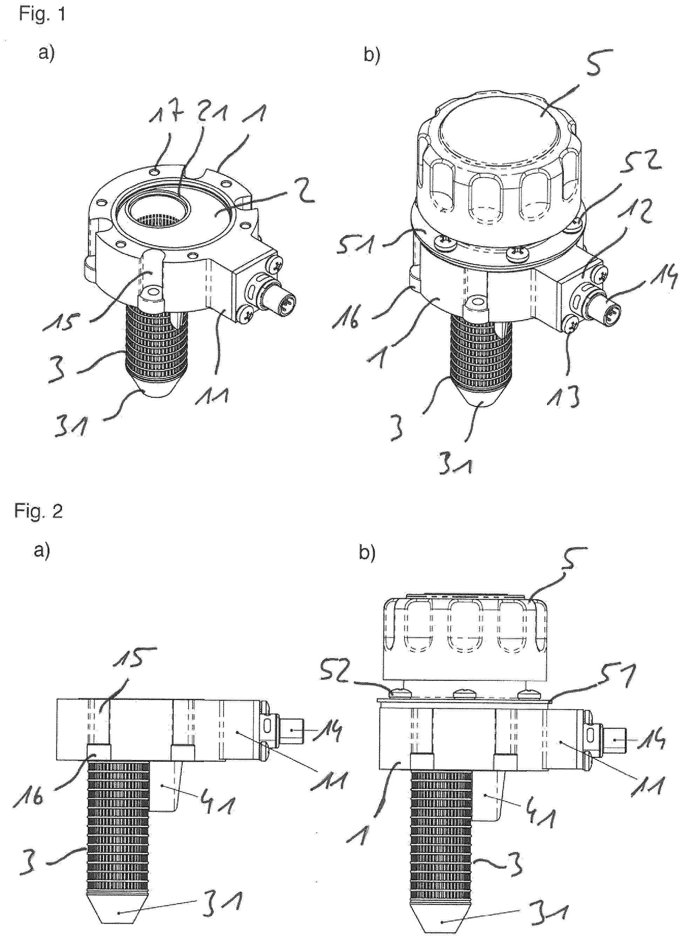

In Figur 1b) ist auf dem Basiskörper 1 ein Einfüll- und Belüftungsfilter 5 aufgebracht. Dieser ist mit seinem, gleichsam mit einem Lochbild gemäß DIN 24557 versehenen Anschlussflansch 51 mittels Schrauben 52, die in die Gewindebohrungen 17 eingeschraubt sind, mit dem Basiskörper 1 verbunden. Bei dem hier gezeigten Einfüll- und Belüftungsfilter handelt es sich um einen Standard-Belüftungsfilter, wie er regelmäßig auf Hydraulikbehälter aufgeschraubt ist. Durch die erfindungsgemäße Ausgestaltung des Basiskörpers 1 ist ein einfacher Einsatz ähnlich eines Adapterrings zwischen Hydraulikbehälter und vorhandenem Belüftungsfilter ermöglicht. Der Belüftungsfilter 5 wird hierzu lediglich von dem Hydraulikbehälter entfernt und auf dem Basiskörper 1 befestigt, welcher wiederum über sein korrespondierendes Lochbild auf den Hydraulikbehälter aufschraubbar ist.

Durch die erfindungsgemäße Vorrichtung ist auf kleinstem Bauraum eine Füllstandüberwachung mittels Ultraschall realisierbar, welche sehr schnell und präzise den Füllstand des Hydraulikbehälters überwacht. Der in Art eines Adapterrings ausgebildete Basiskörper 1 kann mit allen Belüftern beziehungsweise Bauteilen gepaart werden, welche ein Flanschbild nach DIN 24557 aufweisen. Selbstverständlich sind auch andere Flanschbilder realisierbar.

Die vorliegende Erfindung ist gleichsam auch bei Krallenbefestigungen anwendbar, wo anstelle eines Lochbildes die Öffnung selbst über Krallen der Befestigung dient. In diesem Fall wäre bei dem Basiskörper anstelle der Lochbilder ein entsprechend dimensionierter Durchgang des ringförmigen Basiskörpers vorzusehen.

## Patentansprüche

1. Vorrichtung zur Belüftung und Füllstandsmessung eines eine Öffnung mit einem Lochbild zur Aufnahme eines Belüftungsfilters (5) aufweisenden Hydraulikbehälters, umfassend einen ringförmigen Basiskörper (1), der Mittel zur Befestigung an dem Lochbild des Hydraulikbehälters sowie eine Aufnahme zum Aufbringen eines Belüftungsfilters (5) auf den Basiskörper (1) aufweist,
**dadurch gekennzeichnet, dass** in dem Basiskörper (1) ein aus diesem herausragender Siebkörper (3) zur Durchführung durch die Öffnung des Hydraulikbehälters angeordnet ist, und an dem Basiskörper (1) ein Sensor zur berührungslosen Füllstandsmessung angeordnet ist, und der Basiskörper (1) in Art eines Adapterrings ausgebildet ist, und die Mittel zur Befestigung an dem Lochbild des Hydraulikbehälters Ösen (16) zur Durchführung von Befestigungsschrauben umfassen, die ein Lochbild ausbilden, und die Aufnahme für den Belüftungsfilter (5) entweder ein genormtes Lochbild, das durch in den Basiskörper eingebrachte Gewindebohrungen (17) gebildet ist, die versetzt zu den Ösen (16) angeordnet sind oder einen Bajonettanschluss umfasst.

2. Vorrichtung nach Anspruch 1, **dadurch gekennzeichnet, dass** der Sensor ein Ultraschallsensor (4) ist.

3. Vorrichtung nach Anspruch 2, **dadurch gekennzeichnet, dass** an dem Basiskörper (1) eine elektrische Anschlussbuchse (14) angeordnet ist, die mit dem Sensor (4) verbunden ist.

4. Vorrichtung nach einem der vorgenannten Ansprüche, **dadurch gekennzeichnet, dass** an dem Basiskörper (1) eine Schutzkappe (41) zur Abdeckung des Sensors (4) angeordnet ist.

5. Vorrichtung nach einem der vorgenannten Ansprüche, **dadurch gekennzeichnet, dass** der Siebkörper (3) rohrförmig ausgebildet ist.

6. Vorrichtung nach einem der vorgenannten Ansprüche, **dadurch gekennzeichnet, dass** an dem Basiskörper (1) ein Sensor zur berührungslosen Temperaturerfassung, insbesondere ein Pyrometer angeordnet ist.

7. Vorrichtung nach einem der vorgenannten Ansprüche, **dadurch gekennzeichnet, dass** der Basiskörper (1) als Kunststoffspritzgießteil ausgebildet ist.

8. Vorrichtung nach Anspruch 7, **dadurch gekennzeichnet, dass** der Sensor zur berührungslosen Füllstandsmessung und/oder der Sensor zur berührungslosen Temperaturerfassung lösbar in dem Basiskörper (1) angeordnet ist.

## Claims

1. Device for ventilation and fill-level measurement of a hydraulic tank incorporating an opening having a set of holes to receive a ventilation filter (5) and comprising an annular base body (1) incorporating means of fastening to the set of holes on the hydraulic tank and a means of fastening a ventilation filter (5) onto the base body (1), **characterised in that** a filter element (3) projecting from the base body (1) and for insertion through the opening in the hydraulic tank is arranged on the base body (1) and a sensor for contactless fill-level measurement is arranged on the base body (1), and the base body (1) is constructed in the form of an adapter ring, and the means of fastening to the set of holes in the hydraulic tank comprise eyes (16) for inserting fastening screws and forming a set of holes, and the fastening means for the ventilation filter (5) comprises either a standard set of holes in the form of tapped holes (17) made in the base body and arranged offset from the eyes (16) or comprises a bayonet connection.

2. Device in accordance with claim 1, **characterised in that** the sensor is an ultrasonic sensor (4).

3. Device in accordance with claim 2, **characterised in that** the base body (1) has arranged on it an electrical connection socket (14) that is connected to the sensor (4).

4. Device in accordance with any one of the foregoing claims, **characterised in that** the base body (1) has arranged on it a protective cap (41) to cover the sensor (4).

5. Device in accordance with any one of the foregoing claims, **characterised in that** the filter body (3) is constructed tube-shaped.

6. Device in accordance with any one of the foregoing claims, **characterised in that** the base body (1) has arranged on it a sensor, particularly a pyrometer, for contactless temperature recording.

7. Device in accordance with any one of the foregoing claims, **characterised in that** the base body (1) is constructed as an injected plastic part.

8. Device in accordance with claim 7, **characterised in that** the sensor for contactless fill-level measurement and/or the sensor for contactless temperature recording are/is arranged detachably in the base body (1).

## Revendications

1. Dispositif d'aération et de mesure du niveau de remplissage d'un réservoir hydraulique présentant un orifice à gabarit de trous pour recevoir un filtre d'aération (5), comprenant un corps de base (1) annulaire qui présente des moyens de fixation contre le gabarit de trous du réservoir hydraulique ainsi qu'un logement dans lequel fixer un filtre d'aération (5) sur le corps de base (1), **caractérisé en ce que** dans le corps de base (1) est disposé un corps (3) de tamis faisant saillie du corps de base, pour le passage par l'orifice du réservoir hydraulique, et que contre le corps de base (1) est disposé un capteur permettant de mesurer le niveau remplissage sans contact physique, et **en ce que** le corps de base (1) est configuré en forme de bague d'adaptateur et que les moyens de fixation contre le gabarit de trous du réservoir hydraulique comprennent des oeillets (16) pour faire passer des vis de fixation, qui forment un gabarit de trous, et **en ce que** le logement du filtre d'aération (5) comprend soit une configuration de trous normée formée par les alésages filetés (17) ménagés dans le corps de base et disposés décalés par rapport aux oeillets (16), soit une fermeture à baïonnettes.

2. Dispositif selon la revendication 1, **caractérisé en ce que** le capteur est un capteur à ultrasons (4).

3. Dispositif selon la revendication 2, **caractérisé en ce que** contre le corps de base (1) est disposée une prise de branchement (14) électrique qui est reliée au capteur (4).

4. Dispositif selon l'une des revendications précédentes, **caractérisé en ce que** contre le corps de base (1) est disposée une coiffe de protection (41) recouvrant le capteur (4).

5. Dispositif selon l'une des revendications précédentes, **caractérisé en ce que** le corps (3) de tamis est configuré tubulaire.

6. Dispositif selon l'une des revendications précédentes, **caractérisé en ce que** contre le corps de base (1) est disposé un capteur, en particulier un pyromètre, permettant de saisir la température sans contact physique.

7. Dispositif selon l'une des revendications précédentes, **caractérisé en ce que** le corps de base (1) est configuré en pièce en matière plastique injectée.

8. Dispositif selon la revendication 7, **caractérisé en ce que** le capteur de mesure du niveau de remplissage sans contact physique et/ou que le capteur de saisie de la température sans contact physique est disposé de façon détachable dans le corps de base (1).
